# EUROPEAN PATENT APPLICATION

(11) **EP 4 837 926 A1**
(43) Date of publication of application: **11.11.2026**
(21) Application number: 25305671.7
(22) Date of filing: 09.05.2025
(51) Int. Cl.: C08F 2/48, C08F 2/50, B32B 7/12, C08F 220/18, C08K 5/00, C09J 133/08

(54) **UV CURABLE ACRYLATE PRESSURE SENSITIVE ADHESIVES CONTAINING MULTIFUNCTIONAL PHOTOINITIATORS**

(71) Applicant: ARKEMA France, 92800 Puteaux (FR); Université de Haute Alsace, 68200 Mulhouse (FR); Centre National de la Recherche Scientifique, 75016 Paris (FR)
(72) Inventor: LI, Qing, 68057 Mulhouse (FR); LALEVEE, Jacques, 68057 Mulhouse (FR); COMER, Christopher, Dublin, 43017 (US); CHARRIERE, Bruno, 92800 Puteaux (FR)
(74) Representative: Bandpay & Greuter

(57) **Abstract**

Compositions such as pressure sensitive adhesive compositions including multifunctional photoinitiators are disclosed herein as well as applications of such pressure sensitive adhesives, such as laminates, as well as methods of making all of the aforementioned compositions and articles. Preferably the multifunctional photoinitiators are selected from the group of a multifunctional benzophenone compound, a multifunctional anthraquinone compound, a multifunctional hybrid benzophenone-anthraquinone compound and any combination thereof, wherein 2 of the benzophenone units of the multifunctional benzophenone compound have the same aryl moiety, 2 of the anthraquinone units of the multifunctional anthraquinone compound have the same aryl moiety or a benzophenone unit and an anthraquinone unit of the hybrid benzophenone-anthraquinone compound share an aryl moiety. The pressure sensitive adhesive compositions may be used to form laminates.

## Description

### FIELD OF THE INVENTION

The field of the invention includes compositions such as pressure sensitive adhesive compositions including photoinitiators, specifically multifunctional photoinitiators, as well as applications of such pressure sensitive adhesives ("PSA"), such as laminates, as well as methods of making all of the aforementioned, compounds, compositions and articles.

### TECHNICAL BACKGROUND

Ultraviolet ("UV") light curable acrylic hotmelt adhesives (UV-HMPSA) typically utilize 1 of 3 methods (or combinations) to covalently crosslink adhesives and build the cohesive and adhesive properties typical of a pressure sensitive adhesive. The methods to establish crosslinking in UV-HMPSA include the following:
1) Benzophenone attached to the polymer.
   For example, US 5,389,699 relates to an UV-crosslinkable material based on a (meth)acrylate copolymer of copolymerized monomers that are benzophenone derivatives.
2) Double bonds attached to polymer with addition of a type I or type II photoinitiator to crosslink the adhesive.
   For example, US 8,735,506 B2 relates to a process for making UV curable pressure sensitive adhesive (PSA) compositions by derivatizing an acrylic polymer with a derivatizing agent prepared from a hydroxy-functional acrylate monomer and a diisocyanate. or
3) Epoxide groups attached to the polymer that are crosslinked via a photogenerated super acid catalyst .
For example, US 8,796,350 B2 describes a UV curable pressure sensitive adhesive comprising an acrylic polymer and a cationic photoinitiator, wherein said acrylic polymer is prepared from the group consisting of an acrylic monomer consisting of an acrylic or methacrylic acid derivative and a monomer, wherein said monomer comprising a pendant reactive functional group selected from cycloaliphatic epoxide, oxetane or mixtures thereof.

Each of these methods relies on functional groups present in the polymer at the time of synthesis to enable crosslinking to occur. In method 1) above, limited options exist for increasing crosslink density of the polymer once the initial polymer composition/synthesis has been completed. The limitation on crosslinking is due to the finite amount of benzophenone attached to the polymer chain. When the adhesive is irradiated with light, the crosslinking that can occur is set by the amount of benzophenone present and UV light dose. Addition of multifunctional acrylates has limited utility to increase the crosslink density while potentially plasticizing the adhesive at the same time. Additionally, benzophenone reacts most efficiently with light below 300 nm which limits through cure, cure of thicker adhesives, and cure with longer wavelengths of UV light. There is no way to manipulate the cure response to light at longer wavelengths (>320 nm) with regards to method 1) that exists today. UV absorbing additives such as plasticizers, tackifiers, pigments, also present challenges to this type of technology.

In method 2), crosslink density and cure with longer wavelength light can be manipulated more easily. First, the addition of multifunctional oligomers or monomers like trimetholypropane triacrylate can be added to adhesives to increase crosslink density. Second, because the photoinitiator is added to the formulation, photoinitiators can be selected to maximize cure with short and long wavelength UV light (within the UVC range (280nm and less)). Therefore, cure of thick adhesives or adhesives with UV light absorbing additives (i.e., tackifiers) can be improved by proper selection of the photoinitiator. However, thermal instabilities due to the pendant double bond on the polymer exist limiting the utility of the method 2) to low application temperature (preferably less than 130°C, more preferably less than about 120°C, in some instances no more than about 100°C) hot melts UV curable acrylic pressure sensitive adhesives. Due to the instability, limitations of molecular weight and monomer formulation need to be considered when designing products because these two variables have substantial impact on melt viscosity and processing temperature.

In method 3), crosslink density and cure with longer wavelength light can be influenced by the choice of the photoacid generator and epoxy oligomers added to the adhesive. Unfortunately, method 3) polymers can only be designed if stability in the presence of expoxides or oxtanes is afforded. Therefore, the monomer tool box has limitations that limit production of UV-HMPSA's using standard monomers and present challenges when used in equipment shared with other typical UV-HMPSAs (i.e., adhesives that include acrylic acid).

### BRIEF DESCRIPTION

One embodiment disclosed herein is a UV curable composition, preferably a PSA composition, comprising at least one photoinitiator (also referred to as multifunctional photoinitiator) comprising at least one selected from a multifunctional benzophenone compound, a multifunctional anthraquinone compound, a multifunctional hybrid benzophenone-anthraquinone compound and any combination thereof, wherein 2 of the benzophenone units of the multifunctional benzophenone compound have the same aryl moiety, 2 of the anthraquinone units of the multifunctional anthraquinone compound have the same aryl moiety or a benzophenone unit and an anthraquinone unit of the hybrid benzophenone-anthraquinone compound share an aryl moiety.

Preferably the UV curable composition also includes a (alk(en)yl) (meth)acrylate monomer and a (meth) acrylic acid. A further embodiment may include the multifunctional photoinitiator and the reaction product of (alk(en)yl) (meth)acrylate monomer and a (meth) acrylic acid thereby forming at least one of a (meth)acrylate polymer, (meth)acrylate oligomer and combinations thereof. In both of the UV curable composition embodiments the amount of the photoinitiator in the composition may comprise at least about 0.3 wt% up to about 10 wt% of the UV curable PSA composition or a wt% of the photoinitiator in the UV curable PSA composition may comprise one selected from the group about 0.3 to about 0.5%, about 0.5% to about 1.0%, about 1%to about 2%, about 2% to about 3%, about 3% to about 4%, about 4% to about 5%, about 5% to about 6%, about 6% to about 7%, about 7% to about 8%, about 8% to about 9%, about 9% to about 10% and combinations thereof. An application of the UV curable PSA compositions is as a component of a laminate.

Also included herein are methods making the aforementioned laminates.

Advantages of the embodiments disclosed herein may include any one of the following: (1) the ability to manipulate the crosslink density of acrylate polymer; (2) the ability increase the crosslink density of the acrylate polymer; (3) improving/ increasing the cure through the thickness of the polymer; (4) UV absorbing additives such as but not limited to pigments, plasticizers, or tackifiers can be present in formulations; (5) the wavelengths of light outside of the UVC range (100-280 nm) may be used to cure the acrylate polymer, e.g., wavelengths in either the UVB range (above 280 to about 315 nm) and/or the UVA range (above 315 to about 400 nm) (red shifted (absorb light of longer wavelengths)); (6) the dosage of UV light may be reduced for particular embodiments; (7) the ability to manipulate/ increase the crystallinity of the acrylate polymer; (8) the ability to manipulate/ reduce elongation of the acrylate polymer; (9) the ability to reduce swelling by solvents of the acrylate polymer; (10) the ability to reduce the dosage of energy to cure acrylate polymer; (11) manipulate/ increase the modulus of the acrylate polymer; (12) the ability to manipulate/ increase the glass transition temperature of the acrylate polymer; (13) the ability to manipulate/ increase the softening points of the acrylate polymer; and (14) any combination thereof.

### BRIEF DESCRIPTION OF THE FIGURES

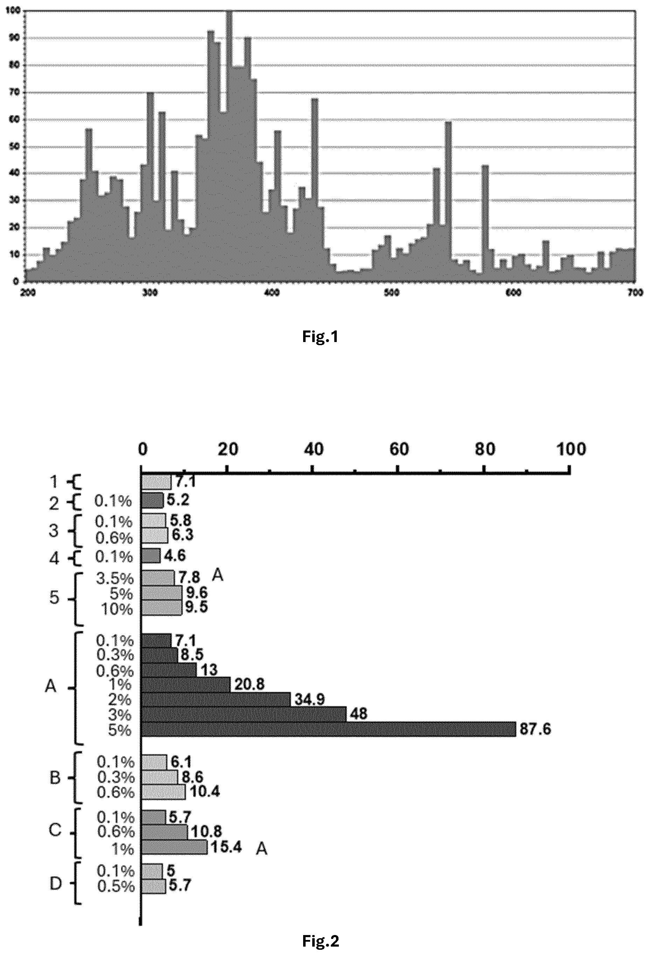

Figure 1 shows the relative intensity (in %, y-axis) as a function of the wavelength (in nm, x-axis) of radiation emitted by the Fe-doped bulb lamp on a conveyor belt.
Figure 2 is a bar chart showing the crosslink density (in mol/m³, x-axis) of cured adhesives prepared using comparative UV-curable PSA compositions from control groups 1 to 5, and cured adhesives prepared with UV-curable PSA compositions according to the invention from example groups A to D, as described in the Examples below. For each test adhesive sample, the amount (in wt %) of photoinitiator added to the base composition is indicated next to the bar on the left.

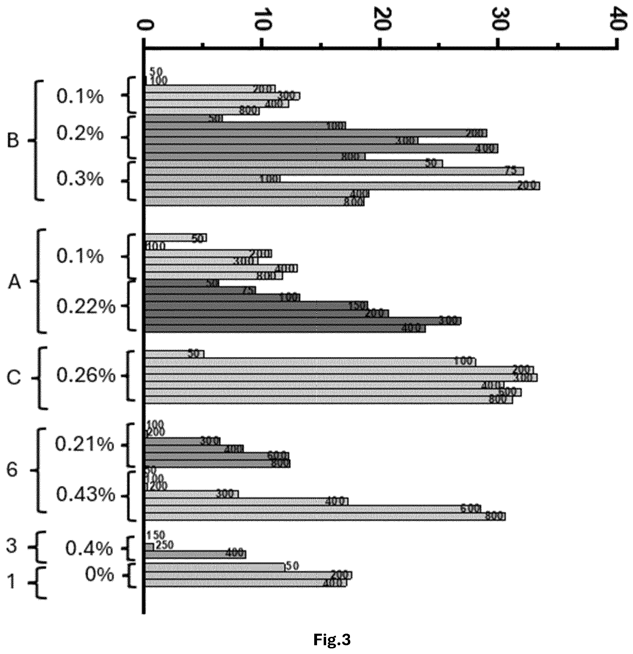

Figure 3 is a bar chart illustrating the cohesive strength of adhesive tapes prepared using comparative UV-curable PSA compositions from control groups 1, 3 and 6, as well as adhesive tapes prepared using UV-curable PSA compositions according to the invention from example groups A to C, at different radiation doses, and expressed as the time after which the adhesive tape separate from its substrate (in hours, x-axis), as described in the Examples below. The numbers on each bar chart indicate the UV dose in mJ/cm²).

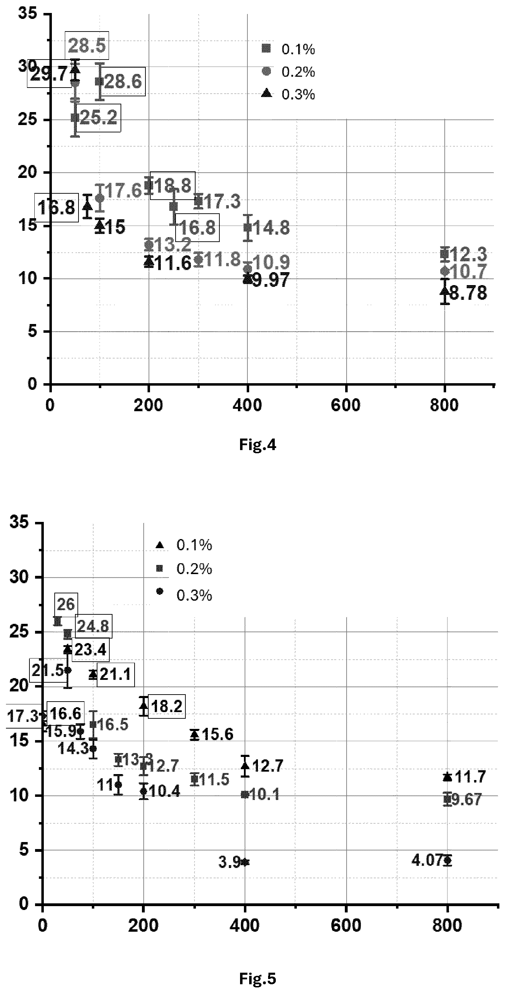

Figure 4 is a chart showing the adhesive strength (in N/25mm, y-axis) of adhesive tapes prepared using UV-curable PSA compositions according to the invention from the example F group, containing 0.1 wt%, 0.2 wt% or 0.3 wt% of photoinitiator, as a function of the radiation dose (in mJ/cm², x-axis) used during their preparation, as described in the Examples below. The numbers included in boxes indicate that the adhesive tape exhibited cohesive failure.
Figure 5 is a chart showing the adhesive strength (in N/25mm, y-axis) of adhesive tapes prepared using three UV-curable PSA compositions according to the invention from the example E group, containing 0,1 wt%, 0.2 wt% or 0.3 wt% of photoinitiator, as a function of the radiation dose (in mJ/cm², x-axis) used during their preparation, as described in the Examples below. The numbers included in boxes indicate that the adhesive tape exhibited cohesive failure.

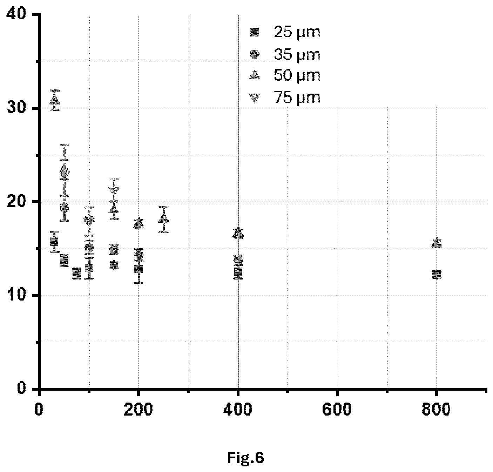

Figure 6 is a chart showing the adhesive strength (in N/25mm, y-axis) of adhesive tapes prepared using comparative UV-curable PSA compositions from the control 1 group having a thickness of 25 µm, 35 µm, 50 µm or 75 µm, as a function of the radiation dose (in mJ/cm², x-axis) used during their preparation, as described in the Examples below.

### DETAILED DESCRIPTION

Before explaining at least one embodiment of the present disclosure in detail, it is to be understood that the present disclosure is not limited in its application to the details of construction and the arrangement of the components or steps or methodologies set forth in the following description or illustrated in the drawings. The present disclosure is capable of other embodiments or of being practiced or carried out in various ways. Also, it is to be understood that the phraseology and terminology employed herein is for the purpose of description and should not be regarded as limiting.

Unless otherwise defined herein, technical terms used in connection with the present disclosure shall have the meanings that are commonly understood by those of ordinary skill in the art. Further, unless otherwise required by context, singular terms shall include pluralities and plural terms shall include the singular.

All patents, published patent applications, and non-patent publications mentioned in the specification are indicative of the level of skill of those skilled in the art to which the present disclosure pertains. All patents, published patent applications, and non-patent publications referenced in any portion of this application are herein expressly incorporated by reference in their entirety to the same extent as if each individual patent or publication was specifically and individually indicated to be incorporated by reference.

All of the articles and/or methods disclosed herein can be made and executed without undue experimentation in light of the present disclosure. While the articles and methods of the present disclosure have been described in terms of preferred embodiments, it will be apparent to those of ordinary skill in the art that variations may be applied to the articles and/or methods and in the steps or in the sequence of steps of the method(s) described herein without departing from the concept, spirit and scope of the present disclosure. All such similar substitutes and modifications apparent to those skilled in the art are deemed to be within the spirit, scope and concept of the present disclosure.

As utilized in accordance with the present disclosure, the following terms, unless otherwise indicated, shall be understood to have the following meanings.

The use of the word "a" or "an" when used in conjunction with the term "comprising" may mean "one," but it is also consistent with the meaning of "one or more," "at least one," and "one or more than one." The use of the term "or" is used to mean "and/or" unless explicitly indicated to refer to alternatives only if the alternatives are mutually exclusive, although the disclosure supports a definition that refers to only alternatives and "and/or." Throughout this application, the term "about" is used to indicate that a value includes the inherent variation of error for the quantifying device, the method(s) being employed to determine the value, or the variation that exists among the study subjects. For example, but not by way of limitation, when the term "about" is utilized, the designated value may vary by plus or minus twelve percent, or eleven percent, or ten percent, or nine percent, or eight percent, or seven percent, or six percent, or five percent, or four percent, or three percent, or two percent, or one percent. The use of the term "at least one" will be understood to include one as well as any quantity more than one, including but not limited to, 1, 2, 3, 4, 5, 10, 15, 20, 30, 40, 50, 100, etc. The term "at least one" may extend up to 100 or 1000 or more depending on the term to which it is attached. In addition, the quantities of 100/1000 are not to be considered limiting as lower or higher limits may also produce satisfactory results. In addition, the use of the term "at least one of X, Y, and Z" will be understood to include X alone, Y alone, and Z alone, as well as any combination of X, Y, and Z. The use of ordinal number terminology (i.e., "first", "second", "third", "fourth", etc.) is solely for the purpose of differentiating between two or more items and, unless otherwise stated, is not meant to imply any sequence or order or importance to one item over another or any order of addition.

As used herein, the words "comprising" (and any form of comprising, such as "comprise" and "comprises"), "having" (and any form of having, such as "have" and "has"), "including" (and any form of including, such as "includes" and "include") or "containing" (and any form of containing, such as "contains" and "contain") are inclusive or open-ended and do not exclude additional, unrecited elements or method steps. The terms "or combinations thereof" and "and/or combinations thereof" as used herein refer to all permutations and combinations of the listed items preceding the term. For example, "A, B, C, or combinations thereof" is intended to include at least one of: A, B, C, AB, AC, BC, or ABC and, if order is important in a particular context, also BA, CA, CB, CBA, BCA, ACB, BAC, or CAB. Continuing with this example, expressly included are combinations that contain repeats of one or more items or terms, such as BB, AAA, AAB, BBC, AAABCCCC, CBBAAA, CABABB, and so forth. The skilled artisan will understand that typically there is no limit on the number of items or terms in any combination, unless otherwise apparent from the context.

For purposes of the following detailed description, other than in any operating examples, or where otherwise indicated, numbers that express, for example, quantities of ingredients used in the specification and claims are to be understood as being modified in all instances by the term "about". The numerical parameters set forth in the specification and attached claims are approximations that may vary depending upon the desired properties to be obtained in carrying out the invention.

The term "monomer" refers to a small molecule that chemically bonds during polymerization to one or more monomers of the same or different kind to form a polymer.

The term "polymer" refers to a large molecule prepared from one or more types of monomer residues (repeating units) connected by covalent chemical bonds. By this definition, polymer encompasses compounds wherein the number of monomer units may range from very few, which more commonly may be called as oligomers, to very many.

Preferably the polymer has more than about 8 repeat units and the oligomer include more than 1 repeat unit and up to about 8 repeat units.

The term "copolymer" herein refers to a polymer prepared from more than one monomers.

### Experimental Conditions

### 1. Crosslinking Density

The evolution of the dynamic moduli of PSA samples upon photopolymerization was followed on a Haake-Mars Rotational Rheometer (ThermoFisher, Asnières sur Seine, France) at a constant frequency of 10 Hz and at 120°C. A plate-plate geometry with a gap of 300 micrometers was used. A mercury UV lamp (I₀=286 mW/cm²) was selected in this experiment. The modulus measured within the rubbery plateau region can be used to quantitatively calculate the crosslinking density. According to the theory of rubber elasticity, the modulus at low strain rate is given by: $G ′ = \frac{ρRT}{{M}_{C}} = \frac{ρRT}{\frac{ρ}{n}} = n RT$

Where ρ is the density of the material, T the temperature, and R the perfect gas constant. n is the number of network chain segments bounded on both ends by crosslinks (mol/m³), while M_{c} is the number average molecular weight between crosslinks (g/mol).

### 2. Peel Adhesion Test

Peel adhesion measurement was performed on a Zwick / Roell Z010 testing machine at room temperature. A strip of tested material (carrier tape coated with PSA) with dimensions of 25 x 75 mm was bonded firmly with additional pressing force (1kg steel roller) to the clean steel plate. After 16 hours, the plate and the free end of the strip were clamped in the jaws of the testing machine to provide a 180° angle of removal at a speed of 300 mm/min according to the international standard AFERA 4001. Then, the force required to peel off the tape from the plate was measured during the measurement.

### 3. Cohesion Test

The cohesion test of the obtained adhesive tapes was tested at room temperature according to the international FINAT FTM 8 (Finat Test method) method. The 20 x 20 mm adhesive film was applied to the steel plate and after 15 minutes the other end of the strip was loaded with a weight with a mass of 1 kg. According to the standard, cohesion is the time after which the adhesive film will separate from the steel plate, under a load of 1 kg.

### 4. UV-visible absorption spectra

UV-visible absorption properties of different photoinitiators (PIs) were investigated in dichloromethane using a JASCO V730 spectrometer (JASCO, Lisses, France). Steady-state photolysis studies of the PIs were studied under UV lamp irradiation, and the concentration of the PIs in acetonitrile was 3 x 10⁻⁵ M, and the concentration of amine (EDB, ethyl 4-dimethylaminobenzoate) was 6 x 10⁻⁵ M.

### 5. Redox potentials and free energy change

The redox potentials of the PIs (E_{OX} and E_{red}) were measured in acetonitrile by cyclic voltammetry using a VoltaLab PST006 and tetrabutylammonium hexafluorophosphate as the supporting electrolyte (potentials vs. saturated calomel electrode - SCE). Furthermore, the free energy change ΔG for the interaction of the PIs with additives for the electron transfer reactions in the excited state was calculated from the equation Δ*G = E_{OX} - E_{red} - E^{T}* + *C* (where E_{OX}, E_{red}, and E^{T} are the oxidation potential of the electron donor, the reduction potential of the electron acceptor and the excited state energy level, respectively; C is neglected as usually done for polar solvents.) The oxidation potential of EDB is 1.0 V.

### 6. Laser Flash Photolysis Experiments

A complete laser flash photolysis system was acquired from Luzchem and employed the pulses from a Nd:YAG laser (355 nm, Continuum). For recording the transient absorption spectra and quenching studies with oxygen or EDB, solutions of PI in acetonitrile were prepared with an absorbance value of 0.2~0.3 at the excitation wavelength (355 nm) in a UV-cell with a path length of 1 cm.

### Multifunctional Photoinitiator

The multifunctional photoinitiator disclosed herein preferably includes at least 2 functional groups. Non-limiting examples of number of functional groups for the multifunctional photoinitiator may comprise, at least about 2, at least about 3, at least about 4 and at least about 5.

Disclosed herein is a photoinitiator comprising at least one selected from a multifunctional benzophenone compound, a multifunctional anthraquinone compound, a multifunctional hybrid benzophenone-anthraquinone compound and any combination thereof, wherein 2 of the benzophenone units of the multifunctional benzophenone compound have the same aryl moiety, 2 of the anthraquinone units of the multifunctional anthraquinone compound have the same aryl moiety or a benzophenone unit and an anthraquinone unit of the hybrid benzophenone-anthraquinone compound share an aryl moiety.

The photoinitiator may have a structure of one of (a.) - (q.):
a. 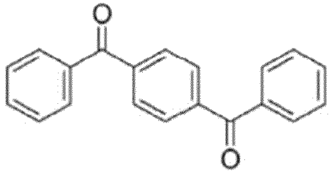 (1,4 difunctional benzophenone or 1,4-DBB)
b. 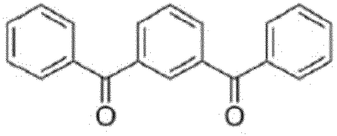 (1,3 difunctional benzophenone or 1,3-DBB)
c. 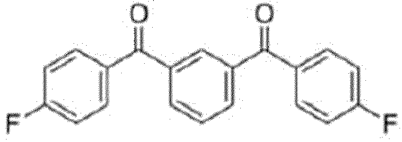 (fluorinated 1,3 difunctional benzophenone or (4-F)1,3-DBB)
d. 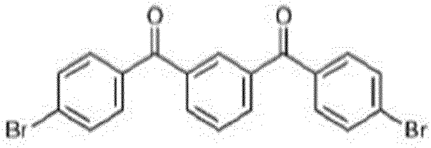 (brominated 1,3 difunctional benzophenone or (4-Br)1,3-DBB)
e. 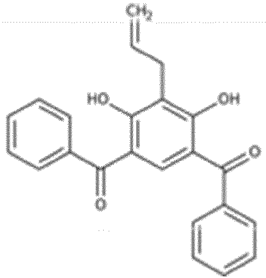 (hydroxyl 1,3 difunctional benzophenone or (2OH)1,3-DBB)
f. 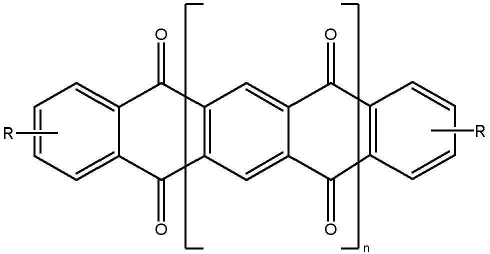
g. 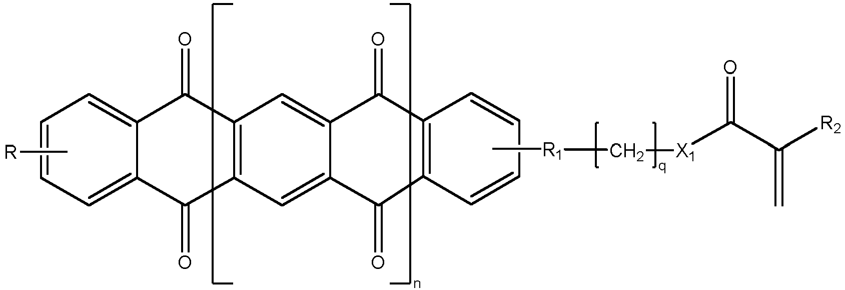
h. 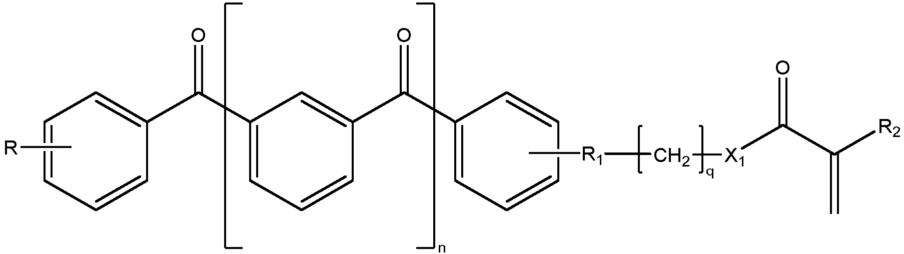
i. 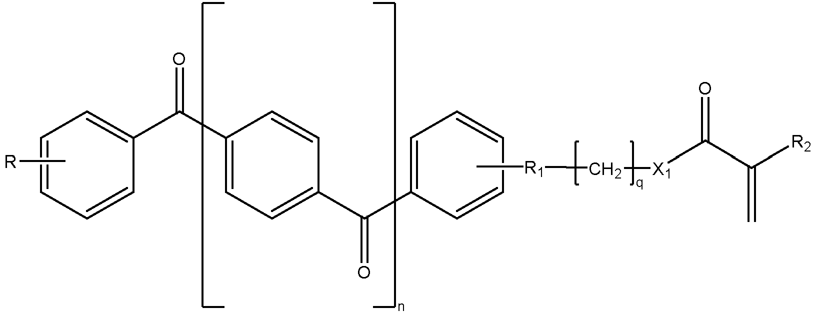
j. 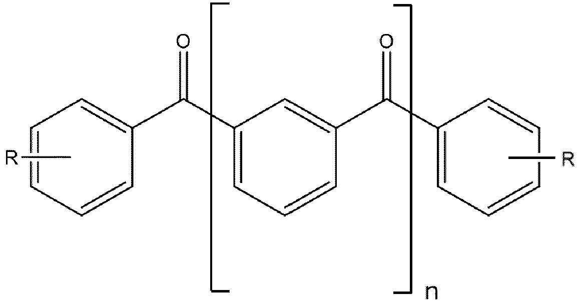
k. 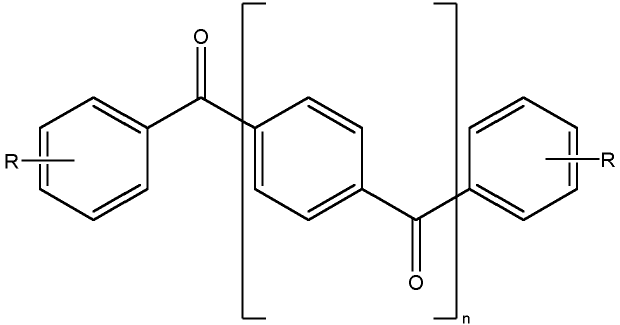
l. 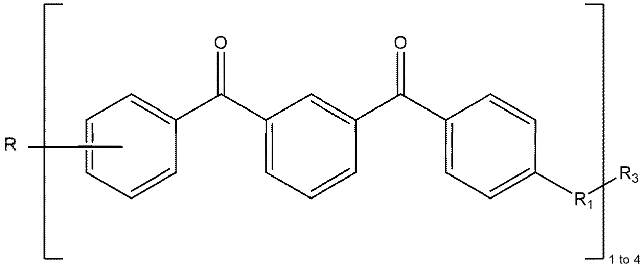
m. 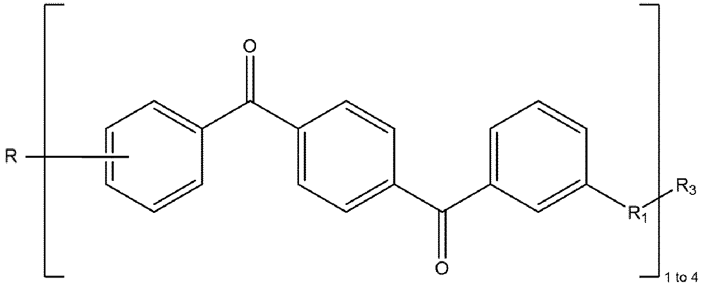
n. 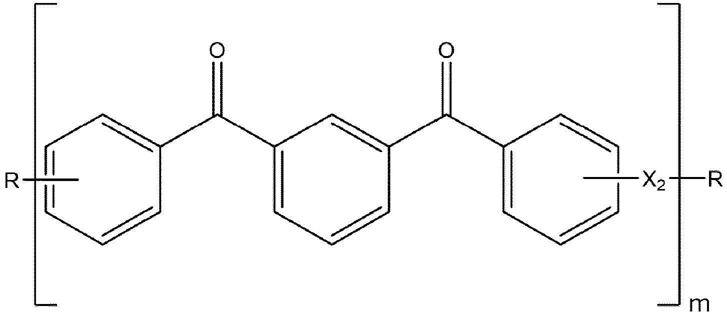
o. 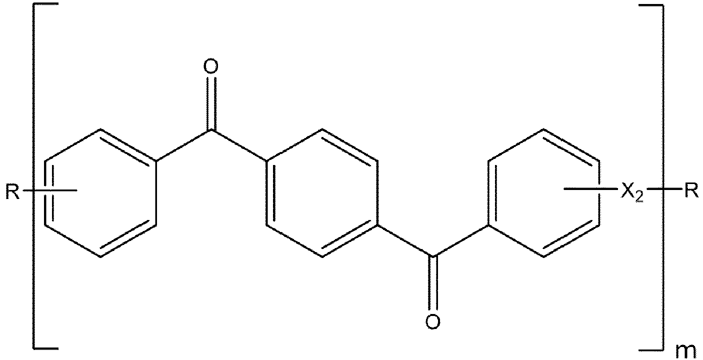
p. 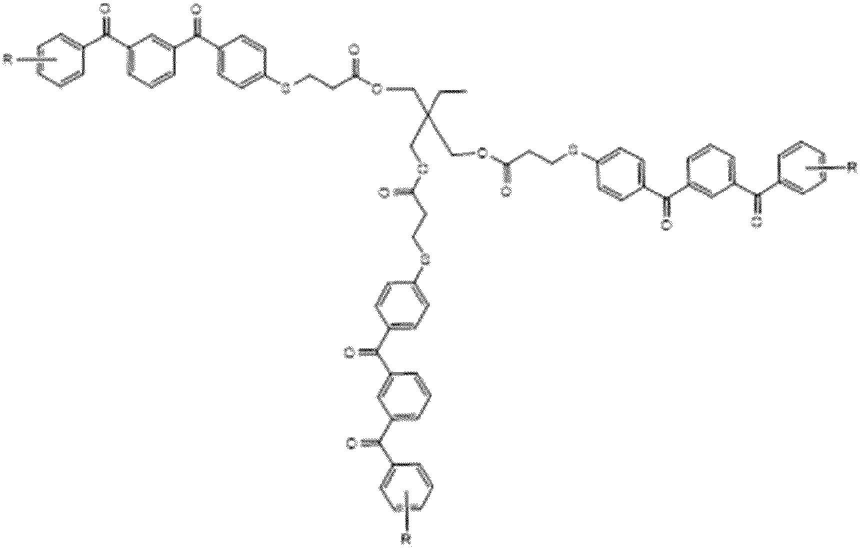 and
q. any combination thereof.

In the above formulae,
n comprises higher than 0, preferably at least 1, more preferably about 1 to 20;
m comprises at least 2, preferably about 2 to 20;
q comprises 0 or higher, preferably about 1 to 20;
R comprises, or is, at least one selected from the group of hydrogen, alkyl, preferably about a C4-C20 carbon chain, more preferably about a C6-C20 carbon chain, vinyl, furyl, thiol, thioether, aryl thioether, alkyl thiolether, morpholino, chlorine, bromine, sulfur, nitrogen, nitrogen- alkyl, ester, ether, alkoxy, phenoxy, amine, amide, urethane, phenyl, (meth)acrylate, (meth)acrylamide, epoxide, oxetane, vinyl, ketone, O-C(=O)-, and any combination thereof;
R₁ is a group selected from thioether, ester, urethane and amide;
R₂ is a methyl group (CH₃) or hydrogen (H);
R₃: comprises at least one group selected from the group of a multifunctional thiol, a multifunctional alcohol, a multifunctional amine, a multifunctional acid and any combination thereof;
X₁ is oxygen or nitrogen with attached proton, preferably the proton comprises hydrogen;
X₂ is a unit derived from the condensation reaction of at least one selected from the group of dialcohol, diacid, dithiol, diamine, and any combinations thereof, to form either an oligomer or a polymer.

The use of polymer or oligomer photoinitiators (such as for example according to structures (n.) or (o.) above) may increase solubility of the photoinitiator in UV curable compositions and may help prevent migration of the photoinitiator out of the polymer UV curable component.

Preferably, the photoinitiator comprises a photoinitiator selected from, or is selected from, the group consisting of 1,3 difunctional benzophenone (1,3-DBB), 1,4 difunctional benzophenone (1,4-DBB), fluorinated 1,3 difunctional benzophenone ((4-F)1,3-DBB), hydroxyl 1,3 difunctional benzophenone ((2OH)1,3-DBB), brominated 1, 3 difunctional benzophenone ((4-Br)1,3-DBB) and the combinations thereof, more preferably from the group consisting of 1,3 difunctional benzophenone, 1,4 difunctional benzophenone, fluorinated 1,3 difunctional benzophenone, brominated 1, 3 difunctional benzophenone and the combinations thereof.

One application of the photoinitiators is as component of a UV curable composition, preferably a composition for a PSA. The photoinitiator may be blended into the composition.

The photoinitiator may be present in the UV curable composition, preferably the UV curable PSA composition, in an amount of at least about 0.1 wt%, preferably at least about 0.2 wt%, more preferably at least about 0.3 wt%, based on the weight of the UV curable composition. An amount of photoinitiator of at least about 0.3 wt% may increase efficiency and improve solubility of the photoinitiator. The photoinitiator may be present in the UV curable composition in an amount of at most about 10 wt%, preferably at most about 5 wt%, %, based on the weight of the UV curable composition. Advantageously, the amount of the photoinitiator in the UV curable composition is from about 0.1 wt% up to about 10 wt%, preferably from about 0.2 wt% up to about 10 wt%, more preferably from about 0.3 wt% up to about 10 wt%, more preferably from about 0.3 wt% up to about 8 wt%, even more preferably from about 0.3 wt% up to about 5 wt%. In embodiments, the amount of the photoinitiator in the UV curable composition may be from about 0.1 wt% to about 0.2 wt%, or from about 0.2 wt% to about 0.3 wt%, or from about 0.3 wt% to about 0.5 wt%, or from about 0.5 wt% to about 1.0 wt%, or from about 1 wt% to about 2 wt%, or from about 2 wt% to about 3 wt%, or from about 3 wt% to about 4 wt%, or from about 4 wt% to about 5 wt%, or from about 5 wt% to about 6 wt%, or from about 6 wt% to about 7 wt%, or from about 7 wt% to about 8 wt%, or from about 8 wt% to about 9 wt%, or from about 9 wt% to about 10 wt%.

The photoinitiator preferably comprises a moiety able to absorb light outside of the UV C range, preferably the amount of light outside of the UV C range capable of being absorbed comprises a sufficient amount of light to cure the UV curable PSA composition, more preferably the moiety is able to absorb light in the UV B range.

### Suitable Components for the UV Curable Compositions

The UV curable composition, preferably the UV curable PSA composition, comprises a UV curable component.

In one embodiment, the UV curable component comprises, or consists of, a blend of at least a (meth)acrylate monomer, in particular a (alk(en)yl) (meth)acrylate monomer, and a (meth)acrylic acid. In such embodiment, the UV curable PSA composition may thus comprise at least:
a. a (alk(en)yl) (meth)acrylate monomer;
b. a (meth) acrylic acid; and
c. a photoinitiator as described herein.

In another embodiment, the UV curable component comprises, or consists of, one or more (meth)acrylate polymers (also referred to as "acrylate polymers"), one or more (meth)acrylate oligomers (also referred to as "acrylate oligomers") or combinations thereof. In this embodiment the UV curable PSA composition may include at least an acrylate polymer or acrylate oligomer and the multifunctional photoinitiator disclosed herein. The UV curable polymers/oligomers disclosed herein can be formed through the polymerization of a (meth)acrylate monomer with a (meth)acrylic acid. In other words, the UV curable polymers/oligomers disclosed herein can be the reaction product of the (meth)acrylate monomer and the (meth)acrylic acid.

In such embodiment, the UV curable PSA composition may thus comprise:
a. a reaction product of at least a (alk(en)yl) (meth)acrylate monomer and a (meth)acrylic acid thereby forming at least one of a (meth)acrylate polymer, (meth)acrylate oligomer and combinations thereof; and
b. a photoinitiator as described herein.

Typically, in both embodiments mentioned above, the (meth)acrylate monomer may include a 1-20 carbon chain, in particular a 2-20 carbon chain. The (meth)acrylate monomer which can be used in either one of the above-mentioned embodiments is described in more detail below.

### The (Meth)Acrylate Monomers

Monomers that may be used in the UV curable PSA compositions disclosed herein include suitable alk(en)yl (meth)acrylates. The monomers can include alkyl acrylates, preferably having 1 to about 20 carbon atoms, more particularly 2 to 20 carbon atoms, in the alkyl group, alkyl methacrylates, hydroxyalkyl acrylates, hydroxyalkyl methacrylates, glycidyl acrylate and/or glycidyl methacrylate. In one non-limiting embodiment, the alkyl acrylate can be selected from the group consisting of n-butyl acrylate, sec-butyl acrylate, tert-butyl acrylate, 2-ethylhexyl acrylate, iso-bornyl acrylate, iso-bornyl methyl acrylate, ethyl acrylate, iso-octyl acrylate, decyl acrylate, and hexyl acrylate. Non-limiting examples of useful alkyl methacrylates can include methyl methacrylate, ethyl methacrylate, 2-ethylhexyl methacrylate, n-butyl methacrylate, sec-butyl methacrylate, tert-butyl methacrylate and dodecyl methacrylate. Examples of hydroxyalkyl acrylate or hydroxyalkyl methacrylate can include, but are not limited to, hydroxyethyl acrylate, hydroxyethyl methacrylate, hydroxypropyl acrylate, hydroxypropyl methacrylate, 4-hydroxybutyl acrylate and 4-hydroxybutyl methacrylate.

The multifunctional photoinitiator described above are used in the UV curable PSA compositions disclosed herein.

### Other Components

The UV curable PSA compositions may include additional monomers as optional components. Examples of suitable optional monomers that may be included in the PSA composition include vinyl acetate compounds, N-vinylpyrrolidone compounds, styrene compounds, in particular alpha methyl styrene compounds, vinyl caprolactam compounds, (meth)acrylamide compounds, maleic anhydride compounds and any combination thereof. Preferably, these monomers are part of the UV curable component.

In some embodiments, the (meth)acrylate polymer or (meth)acrylate oligomer described above is the reaction product of at least a (meth)acrylate monomer, a (meth)acrylic acid and one or more of the additional monomers described above.

The UV curable PSA compositions may also include a further acrylate polymer. The further acrylate polymer is preferably a polymer comprising units derived from at least one (meth)acrylate monomer, preferably as described above, and units derived from (meth)acrylic acid.

The UV curable PSA compositions may optionally include photoinitiators other than the multifunctional photoinitiators described above. The other photoinitiators may comprise a photoinitiator selected from, or may be selected from, the group consisting of benzophenones, anthraquinones, benzoins, benzoin ethers, acetophenones, benzil, benzil ketals, phosphine oxides, α-hydroxyketones, phenylglyoxylates, α-aminoketones, thioxanthones, xanthones, acridine derivatives, phenazene derivatives, quinoxaline derivatives, triazine derivatives, and mixtures thereof. The other photoinitiators may be blended with the UV curable component and the multifunctional photoinitiator in the UV curable PSA composition, and/or, when the UV curable component comprises a (meth)acrylate polymer and/or (meth)acrylate oligomer, the other photoinitiators may be grafted on the (meth)acrylate polymer and/or (meth)acrylate oligomer.

### Additives

The following additives may be included in the PSA compositions: tackifiers, plasticizers, organic pigments, inorganic pigments, dyes, oligomer additives, adhesion promoters, antioxidants, flame retardants, fillers and any combination thereof.

The above-mentioned additives are preferably present in the UV PSA curable compositions, individually and collectively, in an amount that is not sufficient to interfere with the cure of the UV PSA composition. More particularly, the tackifiers may be present in the UV PSA curable composition in an amount of no more than about 50 wt%, preferably less than about 25 wt%, more preferably less than about 15 wt%, more preferably less than about 10 wt%, even more preferably less than about 5 wt%. The plasticizer may be present in the UV PSA curable composition in an amount of less than about 10 wt%, preferably less than about 5 wt%, more preferably less than about 3 wt%. The organic pigments may be present in the UV PSA curable composition in an amount of less than about 20 wt%, preferably less than about 15 wt%, more preferably less than about 10 wt%, preferably less than about 5 wt%, even more preferably less than about 3 wt%. The inorganic pigments may be present in the UV PSA curable composition in an amount of less than about 50 wt%, preferably less than about 40 wt%, more preferably less than about 30 wt%, more preferably less than about 20 wt%, even more preferably less than about 10 wt%.

As non-limiting examples of tackifiers which can be used in the UV curable composition, mention can be made of rosin esters, hydrogenated rosin, hydrogenated rosin esters, terpene phenolic resins, hydrogenated C9 and mixtures thereof.

As non-limiting examples of plasticizers which can be used in the UV curable composition, mention can be made of mineral oil, citrate esters, phthalates, benzoates, adipates and mixtures thereof.

As non-limiting examples of organic pigments and inorganic pigments which can be used in the UV curable composition, mention can be made of phthalocyanine, azo dyes, quinacridone pigments, titanium dioxide, zinc oxide, iron oxides and mixtures thereof.

Disclosed herein is also a method of preparing the UV curable PSA composition. The method comprises mixing the multifunctional photoinitiator with the UV curable component (in particular, the blend of (meth)acrylate monomer and (meth)acrylic acid, or the (meth)acrylate polymer and/or (meth)acrylate oligomer), optionally with additional components and additives as described above.

The present disclosure also describes a method of making a laminate. The method comprises:
a. disposing the UV curable PSA composition described herein on a 1^{st} substrate,
b. applying a 2^{nd} substrate on the UV curable PSA composition, so that the UV curable PSA composition is disposed between the 1^{st} and 2^{nd} substrates;
c. exposing the UV curable PSA composition to a UV light to cure the UV curable PSA composition,
d. optionally applying compressive force to the 1^{st} and 2^{nd} substrates.

The step of exposing the UV curable PSA composition to a UV light takes place after the UV curable PSA composition is applied on the 1^{st} substrate.

The step of exposing the UV curable PSA composition to the UV light may occur before or after applying the 2^{nd} substrate on the UV curable PSA composition, preferably the step of exposing the UV curable PSA composition to the UV light is carried out before applying the 2^{nd} substrate on the UV curable PSA composition.

Preferably the step of applying compressive force occurs during the step of exposing the UV curable PSA composition to the UV light, after the step of exposing the UV curable PSA composition to the UV light, or during and after the step of exposing the UV curable PSA composition to the UV light.

Preferably, the photoinitiator comprises a moiety that absorbs light outside of the UV C range, preferably the amount of light outside of the UV C range capable of being absorbed comprises a sufficient amount of light to cure the UV curable PSA composition, more preferably the moiety absorbs light in the UV B range.

The 1^{st} substrate and the 2^{nd} substrate may be of the same material or of different materials.

The 1^{st} substrate and the 2^{nd} substrate may independently comprise, or be made of, a material selected from the group consisting of wood, metal (such as steel), polyamide, polyester (such as PET), polypropylene, polyethylene, polyvinyl chloride, styrene, foil, polyethylene foam, paper, paperboard and combinations thereof.

The 1^{st} substrate or the 2^{nd} substrate may be a release liner, preferably the 1^{st} substrate is a release liner
The 1^{st} substrate and/or the 2^{nd} substrate may be in the form of a film, in particular made of the above-mentioned material (such as PET for example).

The step of exposing the UV curable PSA composition to the UV light may be carried out using a mercury UV lamp, a LED (light-emitting diode), an iron-doped bulb lamp or any other UV light emitting source.

The UV light applied to the UV curable PSA composition may be a UV C light and/or a UV B light and/or a UV A light. Preferably, the UV light comprises a UV B light. Preferably, the UV light is outside the UV C range.

The UV light applied to the UV curable PSA composition may have a wavelength of from about 250 to about 400 nm, preferably from about 280 to about 400 nm. In particular, the UV light may be from about 250 to about 280 nm, or from about 280 to about 310 nm, or from about 310 to about 340 nm, or from about 340 to about 370 nm, or from about 370 to about 400 nm.

The dose of the light applied to the UV curable PSA composition may be from about 25 to about 800 mJ/cm², such as from about 25 to about 50 mJ/cm², or from about 50 to about 100 mJ/cm², or from about 100 to about 200 mJ/cm², or from about 200 to about 300 mJ/cm², or from about 300 to about 400 mJ/cm², or from about 400 to about 500 mJ/cm², or from about 500 to about 600 mJ/cm², or from about 600 to about 700 mJ/cm², or from about 700 to about 800 mJ/cm².

The UV curable PSA composition disposed on the substrates may be a film, having preferably a thickness of from about 1 µm to about 500 µm, more preferably from about 10 µm to about 200 µm, even more preferably from about25 µm to about 125 µm.

The present disclosure also described a laminate obtained from a method disclosed above.

The present disclosure also described a laminate comprising a cured PSA composition between a 1^{st} and a 2^{nd} substrates. The 1^{st} and 2^{nd} substrates may be as described above. The PSA composition which is cured may be as described above.

Further included herein are the following clauses of additional embodiments.

A 1^{st} clause includes a UV curable PSA composition comprising:
a. a UV curable component; and
b. a photoinitiator comprising at least one selected from a multifunctional benzophenone compound, a multifunctional anthraquinone compound, a multifunctional hybrid benzophenone-anthraquinone compound and any combination thereof, wherein 2 of the benzophenone units of the multifunctional benzophenone compound have the same aryl moiety, 2 of the anthraquinone units of the multifunctional anthraquinone compound have the same aryl moiety or a benzophenone unit and an anthraquinone unit of the hybrid benzophenone-anthraquinone compound share an aryl moiety;

wherein the UV curable component comprises at least:
   i. a (alk(en)yl) (meth)acrylate monomer; and
   ii. a (meth)acrylic acid,
or the UV curable component comprises a reaction product of at least an (alk(en)yl) (meth)acrylate monomer and a (meth)acrylic acid thereby forming at least one of a (meth)acrylate polymer, (meth)acrylate oligomer and combinations thereof;
wherein preferably a wt% of the photoinitiator comprises at least about 0.1 wt% up to about 10 wt%, preferably at least about 0.2 wt% up to about 10 wt%, more preferably at least about 0.3 wt% up to about 10 wt% of the UV curable PSA composition or a wt% of the photoinitiator in the UV curable PSA composition comprises one selected from the group consisting of about 0.1 wt% to about 0.3wt%, about 0.3wt% to about 0.5wt%, about 0.5 wt% to about 1.0 wt%, about 1 wt% to about 2 wt%, about 2 wt% to about 3 wt%, about 3 wt% to about 4 wt%, about 4 wt% to about 5 wt%, about 5 wt% to about 6 wt%, about 6 wt% to about 7 wt%, about 7 wt% to about 8 wt%, about 8 wt% to about 9 wt%, about 9 wt% to about 10 wt% and combinations thereof, based on the weight of the UV curable PSA composition.

A 2^{nd} clause includes a UV curable PSA composition comprising
a. a (alk(en)yl) (meth)acrylate monomer;
b. a (meth) acrylic acid; and
c. a photoinitiator comprising at least one selected from a multifunctional benzophenone compound, a multifunctional anthraquinone compound, a multifunctional hybrid benzophenone-anthraquinone compound and any combination thereof, wherein 2 of the benzophenone units of the multifunctional benzophenone compound have the same aryl moiety, 2 of the anthraquinone units of the multifunctional anthraquinone compound have the same aryl moiety or a benzophenone unit and an anthraquinone unit of the hybrid benzophenone-anthraquinone compound share an aryl moiety,
wherein a wt% of the photoinitiator preferably comprises at least about 0.1 wt% up to about 10 wt%, preferably at least about 0.2 wt% up to about 10 wt%, more preferably at least about 0.3 wt% up to about 10 wt% of the UV curable PSA composition or a wt% of the photoinitiator in the UV curable PSA composition comprises one selected from the group consisting of about 0.1 wt% to about 0.3 wt%, about 0.3 to about 0.5%, about 0.5% to about 1.0%, about 1% to about 2%, about 2% to about 3%, about 3% to about 4%, about 4% to about 5%, about 5% to about 6%, about 6% to about 7%, about 7% to about 8%, about 8% to about 9%, about 9% to about 10% and combinations thereof.

A 3^{rd} clause includes a UV curable PSA composition comprising
a. a reaction product of (alk(en)yl) (meth) acrylate monomer and a (meth) acrylic acid thereby forming at least one of a (meth)acrylate polymer, (meth)acrylate oligomer and combinations thereof and
b. a photoinitiator comprising at least one selected from a multifunctional benzophenone compound, a multifunctional anthraquinone compound, a multifunctional hybrid benzophenone-anthraquinone compound and any combination thereof, wherein 2 of the benzophenone units of the multifunctional benzophenone compound have the same aryl moiety, 2 of the anthraquinone units of the multifunctional anthraquinone compound have the same aryl moiety or a benzophenone unit and an anthraquinone unit of the hybrid benzophenone-anthraquinone compound share an aryl moiety,
wherein a wt% of the photoinitiator preferably comprises at least about 0.1 wt% up to about 10 wt%, preferably at least about 0.2 wt% up to about 10 wt%, more preferably at least about 0.3 wt% up to about 10 wt% of the UV curable PSA composition or a wt% of the photoinitiator in the UV curable PSA composition comprises one selected from the group consisting of about 0.1 wt% to about 0.3 wt%, about 0.3 to about 0.5%, about 0.5% to about 1.0%, about 1% to about 2%, about 2% to about 3%, about 3% to about 4%, about 4% to about 5%, about 5% to about 6%, about 6% to about 7%, about 7% to about 8%, about 8% to about 9%, about 9% to about 10% and combinations thereof.

A 4^{th} clause includes the UV curable PSA composition of clauses 1-3 wherein the photoinitiator has a structure of one of (a.) - (q.):
a. 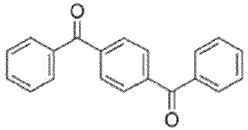
b. 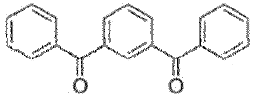
c. 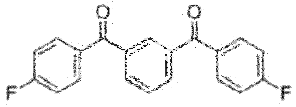
d. 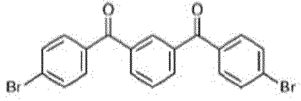
e. 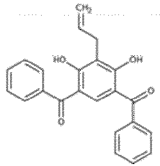
f. 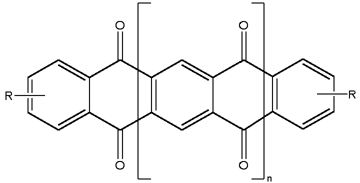
g. 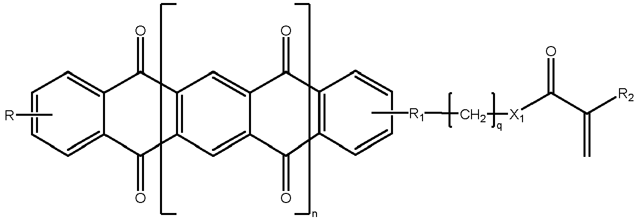
h. 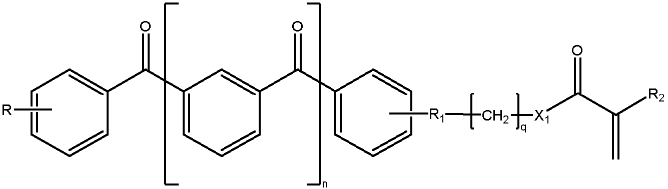
i. 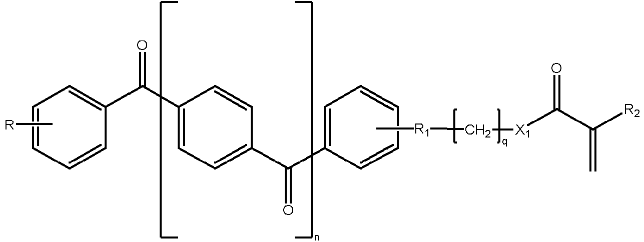
j. 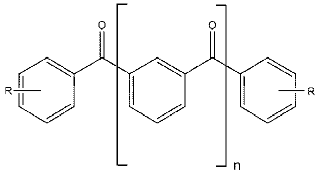
k. 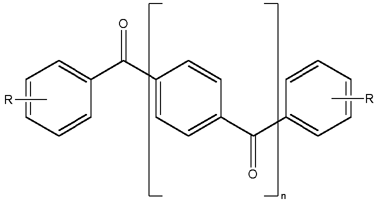
l. 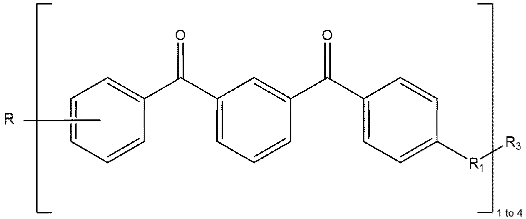
m. 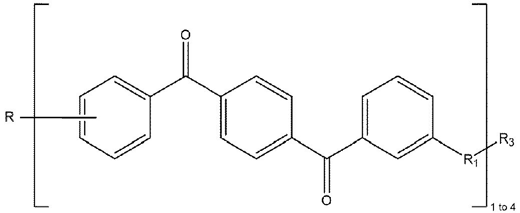
n. 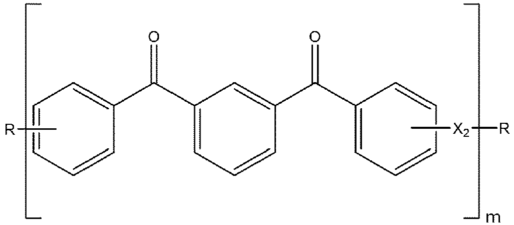
o. 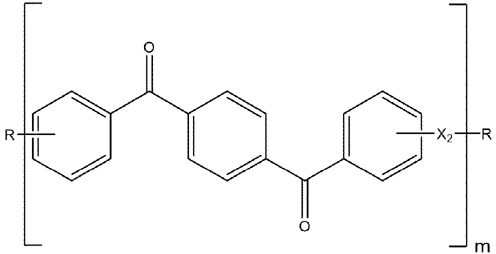
p. 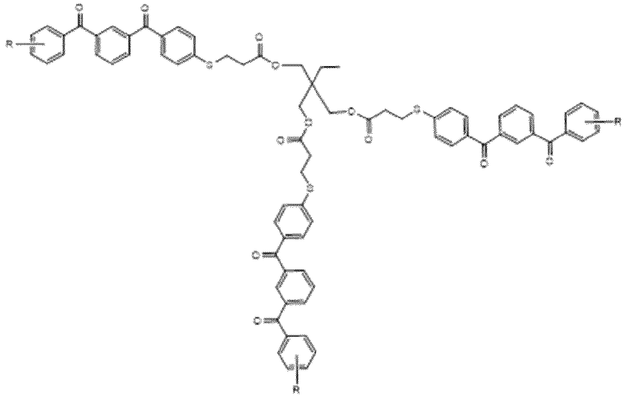 and
q. any combination thereof

wherein n comprises higher than 0, preferably at least 1, more preferably about 1 to 20;
m comprises at least 2, preferably about 2 to 20;
q comprises 0 or higher, preferably about 1 to 20;
R comprises at least one selected from the group of hydrogen, alkyl, preferably about a C4-C20 carbon chain, more preferably about a C6-C20 carbon chain, vinyl, furyl, thiol, thioether, aryl thioether, alkyl thiolether, morpholino, chlorine, bromine, sulfur, nitrogen, nitrogen- alkyl, ester, ether, alkoxy, phenoxy, amine, amide, urethane, phenyl, (meth)acrylate, (meth)acrylamide, epoxide, oxetane, vinyl, ketone, O-C(=O)-, and any combination thereof;
R₁ is selected from thioether, ester, urethane and amide;
R₂ is a methyl group (CH₃) or hydrogen (H);
R₃: comprises at least one selected from the group of a multifunctional thiol, a multifunctional alcohol, a multifunctional amine, a multifunctional acid and any combination thereof;
X₁ is oxygen or nitrogen with attached proton, preferably the proton comprises hydrogen;
X₂ a unit derived from the condensation reaction of at least one selected from the group of dialcohol, diacid, dithiol, diamine, and any combinations thereof, to form an oligomer or a polymer.

A 5^{th} clause includes the UV curable PSA composition of clauses 1-4, wherein the multifunctional benzophenone compound comprises at least one of 1,3 difunctional benzophenone, 1,4 difunctional benzophenone, fluorinated 1,3 difunctional benzophenone, hydroxyl 1,3 difunctional benzophenone, brominated 1, 3 difunctional benzophenone and combinations thereof.

A 6^{th} clause includes the UV curable PSA composition of clauses 1 and 4-5, wherein the UV curable component comprises at least:
i. a (alk(en)yl) (meth)acrylate monomer; and
ii. a (meth)acrylic acid.

A 7^{th} clause includes the UV curable PSA composition of clauses 1-2 and 4-6, further comprising at least one of an acrylate polymer, an acrylate oligomer and combinations thereof.

A 8^{th} clause includes the UV curable PSA composition of clauses 1 and 4-5, wherein the UV curable component comprises a reaction product of a (alk(en)yl) (meth) acrylate monomer and a (meth) acrylic acid thereby forming at least one of a (meth)acrylate polymer, (meth)acrylate oligomer and combinations thereof.

A 9^{th} clause includes the UV curable PSA composition of clauses 1, 3-5 and 8, further comprising a second acrylate polymer.

A 10^{th} clause includes the UV curable PSA composition of clauses 1-9, further comprising at least one additional component selected from the group of a vinyl acetate compound, a N-vinylpyrrolidone compound, a styrene compound, preferably an alpha methyl styrene compound, a vinyl caprolactam compound, a (meth)acrylamide compound, a maleic anhydride compound, a tackifier, a plasticizer, an organic pigment, an inorganic pigment, dye, oligomer additives, adhesion promoter, antioxidant, flame retardant, filler, and any combination thereof.

A 11^{th} clause includes a method of making a laminate comprising
a. disposing the UV curable PSA composition of clauses 1-10 on a 1^{st} substrate,
b. applying a 2^{nd} substrate on the UV curable PSA composition, so that the UV curable PSA composition is disposed between the 1^{st} and 2^{nd} substrates;
c. exposing the UV curable PSA composition to a UV light to cure the UV curable PSA composition, wherein the exposing occurs before or after applying the 2^{nd} substrate on the UV curable PSA composition, and
d. optionally applying compressive force to the 1^{st} and 2^{nd} substrates, preferably the applying compressive force occurs at least one of during the exposing, after the exposing and a combination thereof.

A 12¹¹ clause includes he method of clause 11 wherein the photoinitiator comprises a moiety that absorbs light outside of the UV C range, preferably the amount of light outside of the UV C range capable of being absorbed comprises a sufficient amount of light to cure the UV curable PSA composition, more preferably the moiety absorbs light in the UV B range.

### EXAMPLES

### Example 1: Used Materials

Five groups of comparative UV-curable PSA compositions (Control 1 to Control 5) and six groups of UV-curable PSA compositions according to the invention (Example A to Example F) as described in Table 1 were tested. The compositions according to Controls 2 to 5 and Examples A to F were prepared by blending the photoinitiator with the acrylate polymer.

Arocure 9751 S^{®} is an acrylate polymer made from 2-ethyl hexyl acrylate (~48.8 wt%), butyl acrylate (~45 wt%), acrylic acid(~4 wt%), and acrylated benzophenone (~0.2 wt%).

Acrylic polymer 2 (AP 2) is identical to Arocure 9751 S^{®} but without containing the benzophenone groups.

Acrylic Polymer 1 (AP 1) is an acrylic polymer having a Mw of 208,000 g/mol and a PDI of about of about 7 without any additives, made with 2-ethylhexyl acrylate (~96 wt%) and acrylic acid (~4 wt%).

**Table 1**

| | Acrylate or acrylic acid-based compound | Photoinitiator | Photoinitiator structure |
|---|---|---|---|
| Control 1 | Arocure 9751 S^{®} | - | - |
| Control 2 | Arocure 9751 S^{®} | 1,1'-Iminodianthraquinone | 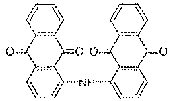 |
| Control 3 | Arocure 9751 S^{®} | Bianthronyl | 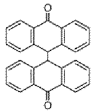 |
| Control4 | Arocure 9751 S^{®} | Bianthrone | 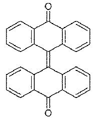 |
| Control 5 | Arocure 9751 S^{®} | 4,4'-bis(diethylamino)benzophenone (SpeedCure EMK^{®}) | 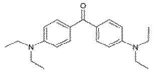 |
| Control 6 | Arocure 9751 S^{®} | 4-Benzoylphenyl Methacrylate (4-BM) | 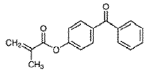 |
| Example A | Arocure 9751 S^{®} | 1,3-Dibenzoylbenzene (1,3-DBB) | 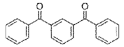 |
| Example B | Arocure 9751 S^{®} | 1,4-Dibenzoylbenzene (1,4-DBB) | 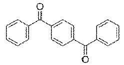 |
| Example C | Arocure 9751 S^{®} | 1,3-Bis(4-fluorobenzoyl)benzene ((4-F)1,3-DBB) | 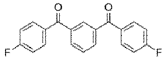 |
| Example D | Arocure 9751 S^{®} | 1,3-Bis(4-bromobenzoyl)benzene (4-Br)1,3-DBB | 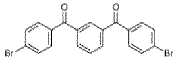 |
| Example E | Acrylic polymer 1 (AP1) | 1,4-Dibenzoylbenzene (1,4-DBB) | 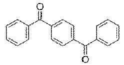 |
| Example F | Acrylic polymer 2 (AP2) | 1,4-Dibenzoylbenzene (1,4-DBB) | 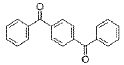 |

### Example 2: Crosslink Density measurement

### Tested UV-curable PSA samples

8 multifunctional photoinitiators were tested at different concentrations as photoreactive crosslinking agents for acrylate PSA Control 1, without tertiary amine co-initiators. Control 1 was used as the base composition for the 8 groups of test samples, Examples A-D and Controls 2-5. More particularly, the crosslinking density of cured adhesives prepared from the compositions as described in Table 2 was determined.

**Table 2**

| **Composition according to :** | **Amount of photoinitiator in the composition (wt%, based on the total weight of the UV curable composition)** |
|---|---|
| Control 1 | - |
| Control 2 | 0.1 |
| Control 3 | 0.1 |
| | 0.5 |
| Control 4 | 0.1 |
| Control 5 | 3.5 |
| | 5 |
| | 10 |
| Example A | 0.1 |
| | 0.3 |
| | 0.6 |
| | 1 |
| | 2 |
| | 3 |
| | 5 |
| Example B | 0.1 |
| | 0.3 |
| | 0.6 |
| Example C | 0.1 |
| | 0.6 |
| | 1 |
| Example D | 0.1 |
| | 0.5 |

### Method

The UV curable PSA compositions were each coated on a 50 µm corona-treated PET carrier using a manual drawdown method, with a basic weight of 35 g/m². Each composition was air dried overnight and then dried in a laboratory oven for 30 min at 80 °C. Photorheology tests were carried out using a mercury lamp. The samples were under constant irradiation during the tests to observe real-time change of viscoelastic property.

For a crosslinked polymer, the storage modulus value in the rubbery plateau region is correlated with the number of crosslinks in the polymer chain. The crosslinking density was measured through the measurement of the storage modulus as described above.

### Results

The results after 15 minutes of irradiation are shown in figure 2. The crosslinking density of Control 1 can be further improved by adding multifunctional photoinitiators as well as the extent of crosslink is controllable by adjusting the concentration of the photoinitiator in the adhesive composition. The photoinitiator according to the invention incorporated into the adhesive can efficiently raise the crosslinking density. In comparison, the cured adhesive prepared from Controls 2-4 demonstrated no increase and the cured adhesive prepared from Control 5 required about ten times the amount of photoinitiator to demonstrate an increase in crosslink density as compared to the cured adhesives from Examples A-C.

### Example 3: Cohesive Strength

### Adhesive tape samples preparation

The cohesive strength of adhesive tapes prepared from compositions according to Control 1 and according to Controls 3 and 6 and Examples A to C with different amounts of photoinitiator was assessed. The tested compositions are shown in Table 3.

**Table 3**

| **Composition according to :** | **Amount of photoinitiator in the composition (wt%, based on the total weight of the UV curable composition)** |
|---|---|
| Control 1 | - |
| Control 3 | 0.4 |
| Control 6 | 0.21 |
| | 0.43 |
| Example A | 0.1 |
| | 0.22 |
| Example B | 0.1 |
| | 0.2 |
| | 0.3 |
| Example C | 0.26 |

The compositions were each coated on a 50 µm corona-treated PET carrier using a manual drawdown method, with a basic weight of 35 g/m². Each composition was air dried overnight and then dried in a laboratory oven for 30 min at 80 °C and then crosslinked into adhesive tapes using a UV lamp conveyor belt (Dymax UVC-5 with an iron-doped bulb with an intensity of approximately 850 mW/cm²). The absorption range of the lamp is shown in Figure 1. The crosslinking was carried out using various radiation doses (doses of about 50, 100, 150, 200, 250, 300, 400, 600 and/or 800 mJ/cm² were used).

### Method

The cohesion test of the obtained adhesive tapes was tested at room temperature according to the international FINAT FTM 8 (Finat Test method) method. The 20 × 20 mm adhesive film was applied to a steel plate and after 15 minutes the other end of the strip was loaded with a weight with a mass of 1 kg. According to the standard, cohesion is the time after which the adhesive film will separate from the steel plate, under a load of 1 kg.

### Results

The results are shown in figure 3. Adhesive tapes prepared from compositions according to the invention having a photoinitiator concentration of more than 0.1 wt% demonstrated an increased cohesive strength compared to the adhesive tapes prepared from Control 1 for most UV dosages of at least about 100 mJ/cm² to less than about 800 mJ/cm².

### Example 4 : Peel and Shear Adhesion

### Adhesive tape samples preparation

Firstly, various UV-curable PSA compositions (A' to J'), belonging to the comparative control group (1, 3 or 6) or to the example group according to the invention (A, B or C), were prepared (Table 3).

The adhesive strength of adhesive tapes prepared from compositions according to Control 1 and according to Examples E end F with different amounts of photoinitiator was determined. The tested compositions, and the thickness of the adhesive tapes prepared from them, are shown in Table 4.

**Table 4**

| **Composition according to :** | **Amount of photoinitiator in the composition (wt%, based on the total weight of the UV curable composition)** | Thickness of the adhesive tape (µm) |
|---|---|---|
| Example E | 0.1 | 35 |
| | 0.2 | 35 |
| | 0.3 | 35 |
| Example F | 0.1 | 35 |
| | 0.2 | 35 |
| | 0.3 | 35 |
| Control 1 | - | 25 |
| | - | 35 |
| | - | 50 |
| | - | 75 |

The compositions were each coated on a 50 µm corona-treated PET carrier using a manual drawdown method, with a basic weight of 35 g/m². Each composition was air dried overnight and then dried in a laboratory oven for 30 min at 80 °C and then crosslinked into adhesive tapes using a UV lamp conveyor belt (Dymax UVC-5 with an iron-doped bulb with an intensity of approximately 850 mW/cm²). The crosslinking was carried out using various radiation doses from 50 to 800 mJ/cm².

### Method

The peel adhesion measurement was performed on a Zwick / Roell Z010 testing machine at room temperature, as described above. Each prepared adhesive tape having dimensions of 25 × 75 mm was bonded firmly with additional pressing force (1kg steel roller) to a clean steel plate. After 16 hours, the plate and the free end of the adhesive tape were clamped in the jaws of the testing machine to provide a 180° angle of removal at a speed of 300 mm/min according to the international standard AFERA 4001. The force required to peel off the tape from the plate was measured during the measurement. In addition, the adhesive failure mode (cohesive failure or adhesive failure) was recorded. Cohesive failure occurs when some adhesive remains on the substrate (steel plate) whereas adhesive failure is characterized by little to no adhesive residue left on the substrate.

### Results

The results are shown in figure 4 (showing the adhesive strength of the adhesive tapes prepared from the compositions according to Example F with three different concentrations of photoinitiator), in figure 5 (showing the adhesive strength of the adhesive tapes prepared from the compositions according to Example E with three different concentrations of photoinitiator) and in figure 6 (showing the adhesive strength of the adhesive tapes of four different thicknesses prepared from the composition according to Control 1). The adhesive tapes prepared from the compositions according to Example E and from the compositions according to Example F show different peel adhesion and shear strength profiles depending on the concentration of the photoinitiator and the UV dose. With more photoinitiator in the system, it took less UV dose to cure the adhesive. The adhesive tapes prepared from the compositions according to Example F showed better results (i.e. higher adhesive strength) compared to the adhesive tapes prepared from the compositions according to Example E. While not wanting to be bound by theory it is believed this may be due to the additives included in the composition according to Example E. The comparison between the adhesive tapes prepared from the compositions according to Example F and the comparative adhesive tapes prepared from the composition according to Example Control 1 shows the effectiveness of the invention. A benefit observed for the adhesive tapes prepared from compositions according to both Example E and Example F is that at low doses both exhibited cohesive failure. For doses of at least 400 mJ/cm², all adhesive tapes (comparative and according to the invention) tested exhibited adhesive failure. All adhesive tapes prepared from the composition according to Control 1 exhibited adhesive failure.

## Claims

1. A UV curable PSA composition comprising:
a. a UV curable component; and
b. a photoinitiator comprising at least one selected from a multifunctional benzophenone compound, a multifunctional anthraquinone compound, a multifunctional hybrid benzophenone-anthraquinone compound and any combination thereof, wherein 2 of the benzophenone units of the multifunctional benzophenone compound have the same aryl moiety, 2 of the anthraquinone units of the multifunctional anthraquinone compound have the same aryl moiety or a benzophenone unit and an anthraquinone unit of the hybrid benzophenone-anthraquinone compound share an aryl moiety;
wherein the UV curable component comprises at least:
i. a (alk(en)yl) (meth)acrylate monomer; and
ii. a (meth)acrylic acid,
or the UV curable component comprises a reaction product of at least an (alk(en)yl) (meth)acrylate monomer and a (meth)acrylic acid thereby forming at least one of a (meth)acrylate polymer, (meth)acrylate oligomer and combinations thereof;
wherein preferably a wt% of the photoinitiator comprises at least about 0.1 wt% up to about 10 wt%, preferably at least about 0.2 wt% up to about 10 wt%, more preferably at least about 0.3 wt% up to about 10 wt% of the UV curable PSA composition or a wt% of the photoinitiator in the UV curable PSA composition comprises one selected from the group consisting of about 0.1 wt% to about 0.3 wt%, about 0.3 wt% to about 0.5 wt%, about 0.5 wt% to about 1.0 wt%, about 1 wt% to about 2 wt%, about 2 wt% to about 3 wt%, about 3 wt% to about 4 wt%, about 4 wt% to about 5 wt%, about 5 wt% to about 6 wt%, about 6 wt% to about 7 wt%, about 7 wt% to about 8 wt%, about 8 wt% to about 9 wt%, about 9 wt% to about 10 wt% and combinations thereof, based on the weight of the UV curable PSA composition.

2. The UV curable PSA composition of claim 1 wherein the photoinitiator has a structure of one of (a.) - (q.):
a. 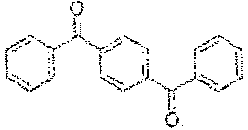
b. 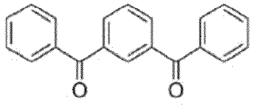
c. 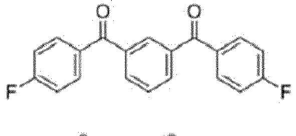
d. 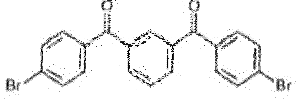
e. 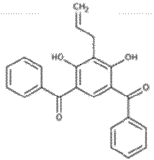
f. 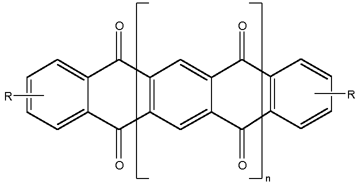
g. 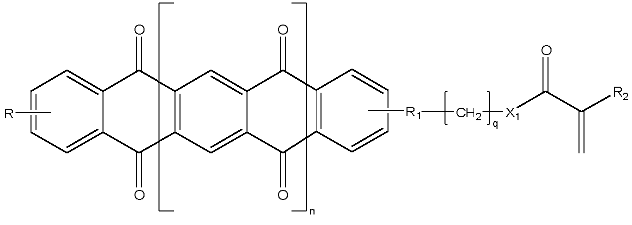
h. 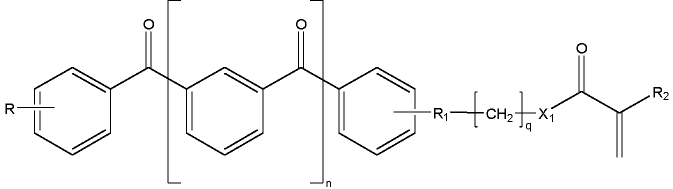
i. 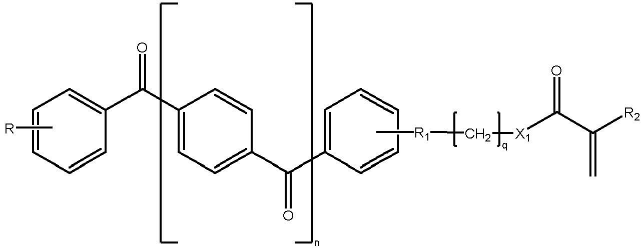
j. 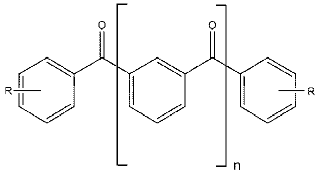
k. 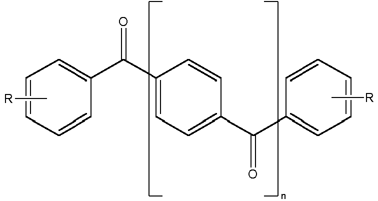
l. 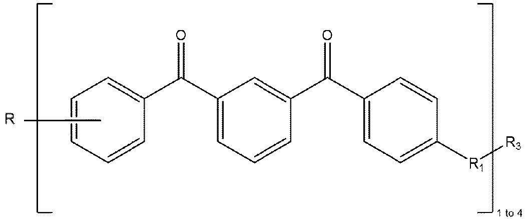
m. 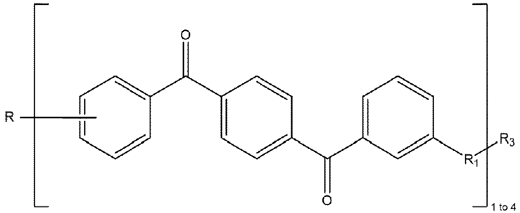
n. 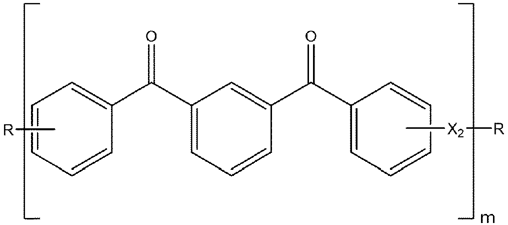
o. 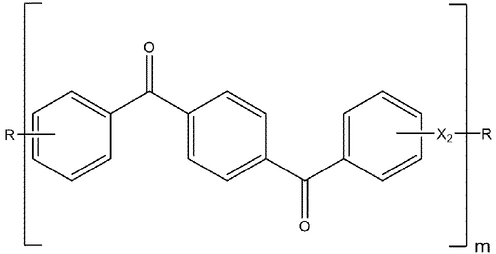
p. 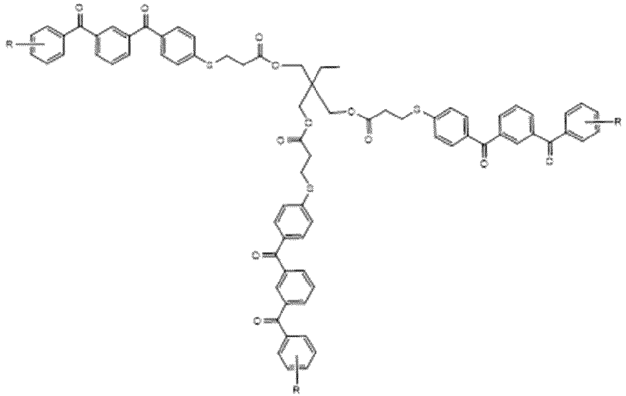 and
q. any combination thereof
wherein n comprises higher than 0, preferably at least 1, more preferably about 1 to 20;
m comprises at least 2, preferably about 2 to 20;
q comprises 0 or higher, preferably about 1 to 20;
R comprises at least one selected from the group of hydrogen, alkyl, preferably about a C4-C20 carbon chain, more preferably about a C6-C20 carbon chain, vinyl, furyl, thiol, thioether, aryl thioether, alkyl thiolether, morpholino, chlorine, bromine, sulfur, nitrogen, nitrogen- alkyl, ester, ether, alkoxy, phenoxy, amine, amide, urethane, phenyl, (meth)acrylate, (meth)acrylamide, epoxide, oxetane, vinyl, ketone, O-C(=O)-, and any combination thereof;
R₁ is selected from thioether, ester, urethane and amide;
R₂ is a methyl group (CH₃) or hydrogen (H);
R₃: comprises at least one selected from the group of a multifunctional thiol, a multifunctional alcohol, a multifunctional amine, a multifunctional acid and any combination thereof;
X₁ is oxygen or nitrogen with attached proton, preferably the proton comprises hydrogen;
X₂ a unit derived from the condensation reaction of at least one selected from the group of dialcohol, diacid, dithiol, diamine, and any combinations thereof, to form an oligomer or a polymer.

3. The UV curable PSA composition of claim 1 or 2, wherein the multifunctional benzophenone compound comprises at least one of 1,3 difunctional benzophenone, 1,4 difunctional benzophenone, fluorinated 1,3 difunctional benzophenone, hydroxyl 1,3 difunctional benzophenone, brominated 1, 3 difunctional benzophenone and combinations thereof.

4. The UV curable PSA composition of any one of claims 1 to 3, wherein the UV curable component comprises at least:
i. a (alk(en)yl) (meth)acrylate monomer; and
ii. a (meth)acrylic acid.

5. The UV curable PSA composition of claim 4, further comprising at least one of an acrylate polymer, an acrylate oligomer and combinations thereof.

6. The UV curable PSA composition of any one of claims 1 to 3, wherein the UV curable component comprises a reaction product of a (alk(en)yl) (meth) acrylate monomer and a (meth) acrylic acid thereby forming at least one of a (meth)acrylate polymer, (meth)acrylate oligomer and combinations thereof.

7. The UV curable PSA composition of claim 6, further comprising a second acrylate polymer.

8. The UV curable PSA composition of any one of claims 1 to 7, further comprising at least one additional component selected from the group of a vinyl acetate compound, a N-vinylpyrrolidone compound, a styrene compound, preferably an alpha methyl styrene compound, a vinyl caprolactam compound, a (meth)acrylamide compound, a maleic anhydride compound, a tackifier, a plasticizer, an organic pigment, an inorganic pigment, dye, oligomer additives, adhesion promoter, antioxidant, flame retardant, filler, and any combination thereof.

9. A method of making a laminate comprising
a. disposing the UV curable PSA composition of any one of claims 1 to 8 on a 1^{st} substrate,
b. applying a 2^{nd} substrate on the UV curable PSA composition, so that the UV curable PSA composition is disposed between the 1^{st} and 2^{nd} substrates;
c. exposing the UV curable PSA composition to a UV light to cure the UV curable PSA composition, wherein the exposing occurs before or after applying the 2^{nd} substrate on the UV curable PSA composition, and
d. optionally applying compressive force to the 1^{st} and 2^{nd} substrates, preferably the applying compressive force occurs at least one of during the exposing, after the exposing and a combination thereof.

10. The method of claim 9 wherein the photoinitiator comprises a moiety that absorbs light outside of the UV C range, preferably the amount of light outside of the UV C range capable of being absorbed comprises a sufficient amount of light to cure the UV curable PSA composition, more preferably the moiety absorbs light in the UV B range.
